# EUROPÄISCHE PATENTSCHRIFT

(11) **EP 2 588 776 B1**
(45) Veröffentlichungstag und Bekanntmachung des Hinweises auf die Patenterteilung: **10.10.2018**
(21) Anmeldenummer: 11730938.5
(22) Anmeldetag: 29.06.2011
(51) Int. Cl.: F16G 13/06

(54) **KETTE, SOWIE VERFAHREN ZUR HERSTELLUNG EINER KETTE**
CHAIN, AND METHOD FOR MANUFACTURING A CHAIN
CHAÎNE ET PROCÉDÉ DE FABRICATION D'UNE CHAÎNE

(30) Priorität: 29.06.2010 DE 102010025528
(43) Veröffentlichungstag der Anmeldung: 08.05.2013
(73) Patentinhaber: Ketten-Wulf Betriebs-GmbH, 59889 Eslohe-Kückelheim (DE); Aumund Fördertechnik GmbH, 47495 Rheinberg (DE)
(72) Erfinder: KREMER, Johannes, 59889 Eslohe (DE); KISTERS, Peter, 47589 Uedem (DE); KIRSCHNIOK, Christian, 47445 Moers (DE)
(74) Vertreter: Basfeld, Rainer
(86) Internationale Anmeldenummer: PCT/EP2011/060940
(87) Internationale Veröffentlichungsnummer: WO 2012/001066

(56) Entgegenhaltungen:
- DE-A1-102009 005 403
- DE-C- 534 759
- US-A1- 2009 186 731
- US-B1- 6 589 127

## Beschreibung

Die vorliegende Erfindung betrifft eine Kette, insbesondere eine technische Kette, vorzugsweise eine eindimensional bewegliche Kette (Gelenkkette), weiter vorzugsweise eine Bolzen- oder Rollenkette gemäß dem Oberbegriff des Anspruchs 1. Die vorgenannten Ketten können beispielsweise als Förderketten verwendet werden. Ferner betrifft die Erfindung ein Verfahren zur Herstellung einer Kette gemäß Anspruch 12.

Einige Ketten sind aus DE102009005403, DE534759C,US6589127 und US20090186731 bekannt.

Bei Förderketten kann es, insbesondere durch die Verformung des Bolzens, zu erheblichen bzw. nennenswerten Biegespannungen in den Laschen kommen. Diese hohen Biegespannungen müssen bei der Konstruktion berücksichtigt werden und führen zwangsläufig zu schwereren Laschen und damit zu höheren Kettengewichten. Das wiederum wirkt sich speziell bei Becherwerken negativ aus. Bei den vorgenannten Bolzen und Laschen, ferner auch bei statt der Bolzen verwendeten hohlzylinderförmigen Buchsen, handelt es sich um Kettenelemente.

Die Aufgabe der vorliegenden Erfindung liegt entsprechend darin, eine verbesserte Kette vorzuschlagen, insbesondere eine Kette vorzuschlagen, die bei vergleichbarer Belastbarkeit, insbesondere Zugbelastbarkeit, materialsparender hergestellt werden kann. Erfindungsgemäß wird diese Aufgabe durch eine Kette mit den kennzeichnenden Merkmalen des Anspruchs 1 gelöst. Dadurch, dass die Kette bereits mit mindestens einem vorgespannten, insbesondere negativ vorgespannten Kettenelement, insbesondere einem negativ vorgespannten Bolzen bzw. Laschen, hergestellt ist, kann die durch die Betriebslast verursachte Biegespannung des Kettenelementes, insbesondere der Lasche bzw. auch des Bolzens, reduziert werden.

Im Ergebnis kann die Kette materialsparender als eine Kette gemäß dem Stand der Technik bei gleicher zu erwartender Zuglast hergestellt werden, insbesondere können dünnere Laschen bzw. Bolzen verwendet werden.

Weitere vorteilhafte Ausgestaltungen der erfindungsgemäßen Kette ergeben sich insbesondere aus den Merkmalen der Unteransprüche. Die Merkmale der Unteransprüche können grundsätzlich beliebig miteinander kombiniert werden.

In einer bevorzugten Ausgestaltung der erfindungsgemäßen Kette kann beispielsweise vorgesehen sein, dass das mindestens eine mit einer Vorspannung verbaute Kettenelement in einem unbelasteten Zustand der Kette eine von der geraden Form abweichende Gestalt aufweist. Das Kettenelement wirkt hier wie eine Feder, insbesondere eine Blattfeder. Soweit die Kette auf Zug belastet wird, kann sich das Kettenelement gegen die Vorspannung gerade ziehen.

In der Ausgestaltung der Erfindung ist vorgesehen, dass es sich bei dem Kettenelement um eine Lasche handelt, wobei die Lasche eine Längsachse und Laschenlöcher mit einer Lochachse zur Aufnahme eines Bolzenendes oder eines Buchsenendes aufweist, wobei die Lochachse nicht rechtwinkelig, insbesondere schräg zu der Längsachse oder der Zugrichtung der Kette ausgerichtet ist. Bei der "schrägen" Ausrichtung der Laschenlöcher handelt es sich um eine vorteilhafte Möglichkeit, die benötigte Vorspannung in die Kette bzw. in ein Kettenglied einzubringen. Besonders vorteilhaft bei dieser Variante ist, dass Laschen und Bolzen jeweils mit einer geraden Erstreckung und daher preiswert gefertigt werden können und die Vorspannung, insbesondere die negative Vorspannung, durch die preiswert einzubringenden schrägen Laschenlöcher mit dem Zusammenbau des Kettengliedes bzw. der Kette erzeugt wird.

In einer weiteren vorteilhaften Ausgestaltung der erfindungsgemäßen Kette kann vorgesehen sein, dass mindestens zwei Bolzen oder Buchsen und zwei Laschen ein Kettenglied der Kette bilden, wobei die Bolzen oder Buchsen in einem unbelasteten Zustand der Kette eine jeweils dem anderen Bolzen bzw. Buchse zugewandte Krümmung aufweisen, wobei die Laschen in einem zugunbelasteten Zustand der Kette eine jeweils der anderen Lasche abgewandte Krümmung aufweisen, wobei insbesondere die Laschen in einem zugbelasteten Zustand der Kette, insbesondere deren Längsachsen, parallel zueinander ausgerichtet sind, wobei insbesondere die Bolzen oder Buchsen in einem zugbelasteten Zustand der Kette, insbesondere deren Längsachsen, parallel zueinander ausgerichtet sind. Die vorgenannte Ausgestaltung der Kette bzw. des Kettengliedes kann durch nur eine oder auch eine Kombination von Maßnahmen zur Erzeugung einer Vorspannung erzielt werden. Die Form der vorgenannten Kettenelemente in einem zugunbelasteten Zustand der Kette bietet sich insofern an, als dass sich die Laschen unter Zugbelastung nach innen und die Bolzen bzw. Buchsen sich nach außen biegen können. Im Ergebnis wird das Kettenglied einer erfindungsgemäßen Kette gerade gezogen und gleicht einem Kettenglied gemäß dem Stand der Technik in einem nicht auf Zug belasteten Zustand. Fällt die Zugbelastung weg, nimmt das Kettenglied wieder seinen ursprünglichen nicht gerade Zustand an.

Eine weitere Aufgabe der Erfindung liegt darin, ein Verfahren zur Herstellung einer verbesserten Kette vorzuschlagen, insbesondere eine Verfahren zur Herstellung einer Kette vorzuschlagen, die bei vergleichbarer Belastbarkeit, insbesondere Zugbelastbarkeit, materialsparender hergestellt werden kann.

Erfindungsgemäß wird diese Aufgabe durch ein Verfahren gemäß Anspruch 12 gelöst. Die in Anspruch 12 genannte Ausgestaltung der verwendeten Kettenelemente ist grundsätzlich beliebig kombinierbar. Im Wesentlichen kommt es darauf an, dass mindestens eine Maßnahme zur Erzeugung einer Vorspannung in einem Kettenelement getätigt wird. Das hieraus zusammengesetzte Kettenglied ist dann in sich verspannt.

In der Praxis könnte die negative Vorspannung z. B.
- durch gebogenen Bolzen und gerade Laschenlöcher (die gebogenen Bolzen spannen Laschen und Bolzen vor)
- schiefe Laschenlöcher und gerade Bolzen (Laschen und Bolzen werden durch die schiefen Bohrungen in den Laschen vorgespannt)
- gebogene Laschen mit geraden Laschenlöchern (Laschen und Bolzen werden durch die gebogenen Laschen mit den geraden Löchern vorgespannt)
hergestellt werden. Weitere Maßnahmen sind denkbar. Vorzugsweise werden eine Anzahl von Kettenelementen in der oben skizzierten Weise vorgespannt.

Der Vorschlag / Ansatz gilt grundsätzlich auch für Innenglieder.

In dem Fall kann die negative Vorspannung z. B.
- durch gebogenen Buchsen und gerade Laschenlöcher (die gebogenen Buchsen spannen Laschen und Buchsen vor)
- schiefe Laschenlöcher und gerade Buchsen (Laschen und Buchsen werden durch die schiefen Bohrungen in den Laschen vorgespannt)
- gebogene Laschen mit geraden Laschenlöchern (Laschen und Buchsen werden durch die gebogenen Laschen mit den geraden Löchern vorgespannt)

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: zwei Bolzen und zwei Laschen einer Kette gemäß dem Stand der Technik ohne Zuglast (F);
- Fig. 2: zwei Bolzen und zwei Laschen einer Kette gemäß dem Stand der Technik mit Zuglast (F);
- Fig. 3: eine erfindungsgemäße Kette, insbesondere zwei Bolzen und zwei Laschen, ohne Zuglast (F);
- Fig. 4: eine erfindungsgemäße Kette, insbesondere zwei Bolzen und zwei Laschen, mit Zuglast (F);
- Fig. 5-11: Explosionsdarstellungen von Kettenelementen vor dem Zusammensetzen zu einem Kettenglied bzw. zu einer erfindungsgemäßen Kette;
- Fig. 10a: ein aus den Kettenelementen gemäß einer der Fig. 5 bis 11 zusammengesetztes Kettenglied;
- Fig. 12: eine erfindungsgemäße Kette;
- Fig. 13: eine erfindungsgemäße Kette;
- Fig. 14: eine Lasche zur Darstellung von Seitenfläche und Stirnfläche und ein Bolzen.

Folgende Bezugszeichen werden in den Abbildungen verwendet:
- B: Bolzen (Stand der Technik)
- L: Lasche (Stand der Technik)
- F: Zugkraft / mögliche Laufrichtung
- 1: Bolzen
- 2: Lasche
- 3: Laschenloch
- 4: Buchse
- 5: Längsachse des Bolzens bzw. der Buchse im unverbauten Zustand
- 6: Längsachse der Lasche im unverbauten Zustand
- 7: Lochachse des Laschenlochs
- 8: Seitenfläche
- 9: Stirnfläche
- 5': Längsachse des Bolzens der Buchse im verbauten Zustand
- 6': Längsachse der Lasche im verbauten Zustand

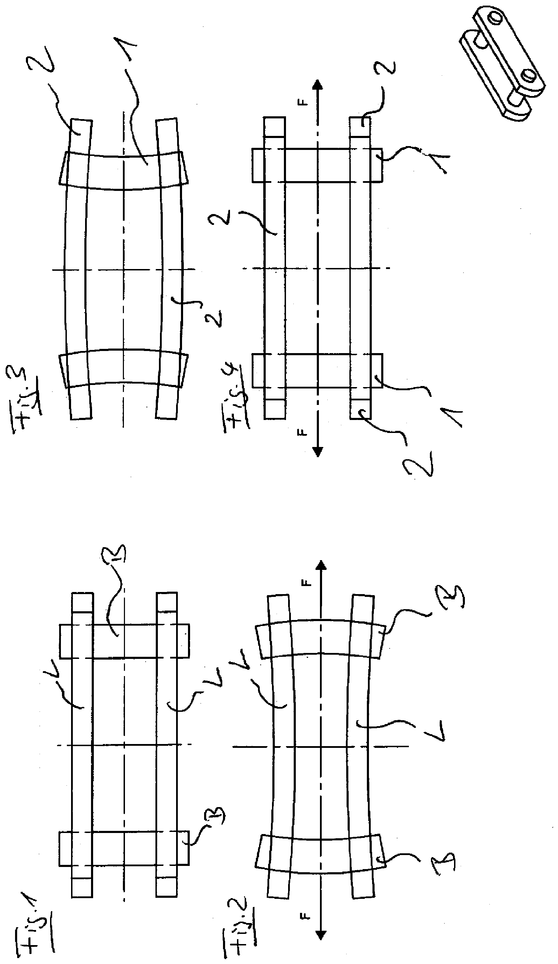

Zunächst wird auf Fig. 1 Bezug genommen. Die Darstellung der Verformung ist zu illustrativen Zwecken in allen Abbildungen übertrieben dargestellt.

Fig. 1 zeigt mehrere Kettenelemente einer Kette gemäß dem Stand der Technik, insbesondere zwei Bolzen B und zwei Laschen L, in einem unbelastetem Zustand, insbesondere ohne Zugkraft F. Es ist ersichtlich, dass die Kettenelemente, insbesondere die Bolzen und Laschen, in einem unbelasteten Zustand der Kette idealtypischerweise gerade sind.

Fig. 2 zeigt mehrere Kettenelemente einer Kette gemäß dem Stand der Technik, insbesondere zwei Bolzen B und zwei Laschen L, in einem belastetem Zustand, insbesondere mit einer Zugkraft F. Es ist ersichtlich, dass die Kettenelemente, insbesondere die Bolzen und Laschen, in einem belasteten Zustand der Kette verformt sind, insbesondere von der idealtypischen geraden Form abweichen. Dies ist im Wesentlichen auf die durch die Zugkraft resultierenden Spannungen zurückzuführen.

Fig. 3 zeigt mehrere Kettenelemente einer erfindungsgemäßen Kette, insbesondere zwei Bolzen 1 und zwei Laschen 2, in einem unbelastetem Zustand, insbesondere ohne Zugkraft F. Es ist ersichtlich, dass die Kettenelemente, insbesondere die Bolzen und Laschen, in einem unbelasteten Zustand der Kette nicht gerade sind. Die Darstellung ist übertrieben dargestellt. Die Kettenelemente, insbesondere die Bolzen und Laschen, sind mit einer Vorspannung verbaut.

Fig. 4 zeigt mehrere Kettenelemente einer erfindungsgemäßen Kette, insbesondere zwei Bolzen 1 und zwei Laschen 2, in einem belastetem Zustand, insbesondere mit einer Zugkraft F. Es ist ersichtlich, dass die Kettenelemente, insbesondere die Bolzen und Laschen, in einem belasteten Zustand der Kette idealtypischerweise gerade sind. Dies ist im Wesentlichen darauf zurückzuführen, dass die aus der Zugkraft resultierenden Spannungen der Vorspannung entgegenwirken. Im Idealfalle heben sich die vorgenannten Spannungen gegeneinander auf. Etwas salopp könnte angeführt werden, dass die belastete erfindungsgemäße Kette der unbelasteten Kette gemäß dem Stand der Technik hinsichtlich ihrer äußeren Form gleicht.

Dies hat den Effekt, dass die Kette erst unter ihrer regulären Belastung, insbesondere einer Zugkraft in Laufrichtung der Kette, gerade Kettenelemente, insbesondere Laschen, Bolzen und/oder Buchsen aufweist. Mit anderen Worten: Eine mit den vorgeschlagenen Kettenelementen ausgestattete Kette zieht sich erst unter Belastung gerade, sprich weist unter Zugbelastung eine Form auf, wie sie einer unbelasteten Kette gemäß dem Stand der Technik entspricht. Hierdurch kann eine hohe Maßhaltigkeit der zugbelasteten Kette sichergestellt werden, wodurch beispielsweise der Eingriff eines Zahnrades oder die Drehung der einzelnen Kettenglieder, salopp gesagt der Lauf der Kette, verbessert werden kann, wobei dies jedoch nicht durch einen höheren oder teureren Materialeinsatz erreicht wird.

Durch den unter Last weniger oder gar nicht gekrümmten Bolzen ergibt sich ein weiterer Vorteil der Erfindung. Die Auflageflächen zwischen Buchsen und Bolzen wird erhöht, die sog. Kantenpressung wird reduziert. Buchsen und Bolzen liegen optimalen aufeinander. Das bedeutet eine Verschleißreduzierung.

Eine erfindungsgemäße Kette umfasst im Wesentlichen eine Anzahl von Kettengliedern. Ein Kettenglied umfasst eine Anzahl von Kettenelementen, insbesondere Laschen 2 mit Laschenlöchern 3, Bolzen 1 und/oder Buchsen 4. Die Laschen 2 können beispielsweise als Außenlaschen ausgestaltet sein. In diesem Fall umfasst das Kettenglied vorzugsweise Laschen 2 und Bolzen 1. Die Laschen können ferner als Innenlaschen ausgestaltet sein. In diesem Fall umfasst das Kettenglied vorzugsweise Laschen und Buchsen 4. In einer Kette sind jeweils die Bolzen 1 durch die Buchsen 4 gesteckt und somit eine Anzahl von Kettengliedern hintereinander angeordnet. Vorgenannte Ausführungsform bildet eine recht einfache Kette. Denkbar sind auch mehr als zwei Laschen pro Kettenglied, so dass auch Zwischenlaschen denkbar sind.

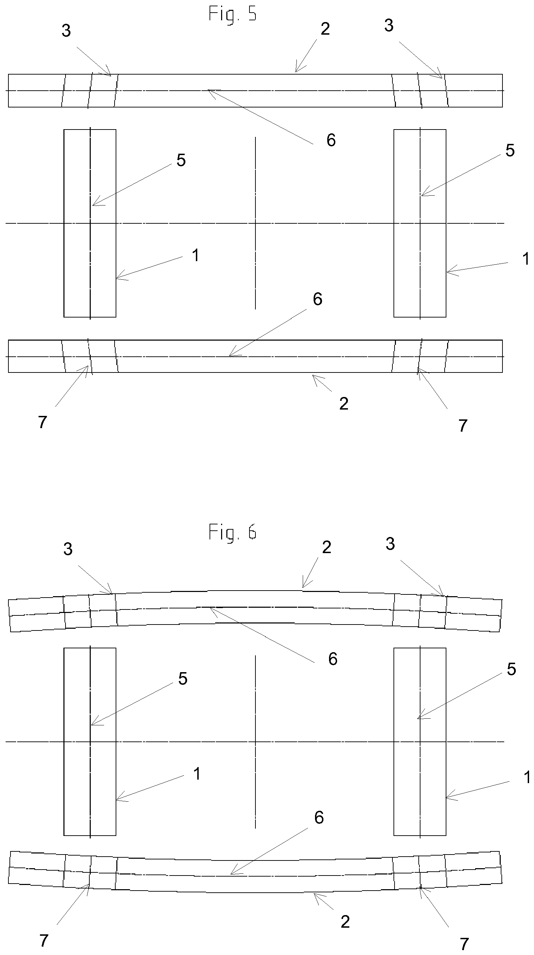

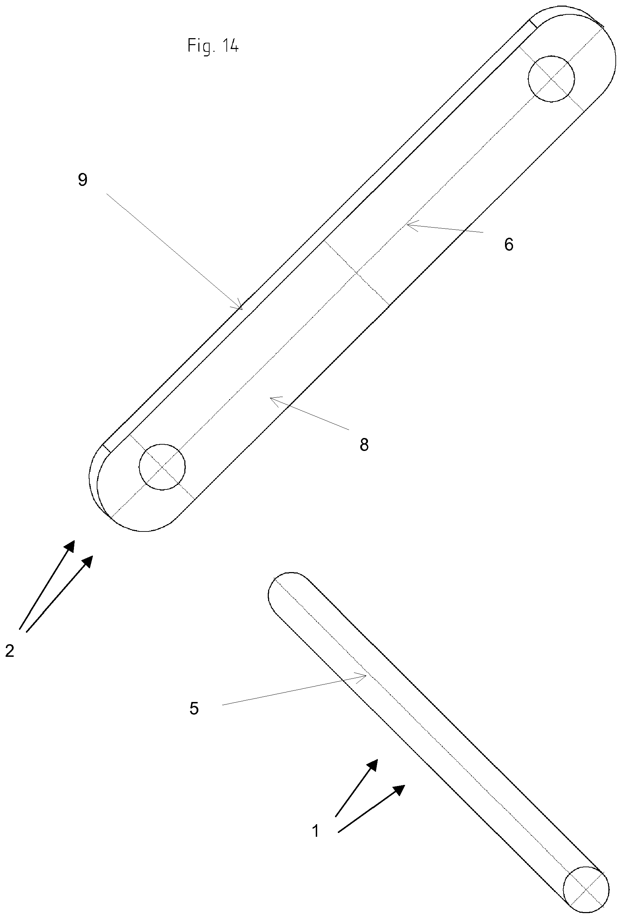

In den Fig. 5 bis 11 sind Kettenelemente vor dem Zusammenfügen zu einem Kettenglied bzw. einer Kette dargestellt. Die Fig. 5 bis 11 dienen insbesondere dazu, die verschiedenen Möglichkeiten zur Erzeugung einer Vorspannung innerhalb des Kettengliedes näher zu erläutern. Die einzelnen unverbauten Kettenelemente weisen Längsachsen, insbesondere die Lasche 2 eine Längsachse 6, der Bolzen 1 eine Längsachse 5 und die Buchse 4 eine Längsachse 5 auf. Soweit von einer Lasche ausgegangen wird, die zwei Seitenflächen 8 und eine Stirnflächen 9 aufweist, wobei mindestens eine Seitenfläche 8 den Bolzen 1 bzw. der Buchse 4 zugewandt ist, soll von einer Längsachse 6 ausgegangen werden, die sich bei Draufsicht auf die Stirnfläche 9 der Lasche 2 ergibt. Beispielhaft ist eine Lasche, ein Bolzen und eine Buchse in perspektivischen Ansichten in Fig. 14 dargestellt.

Die Laschenlöcher 3 weisen jeweils Lochachsen 7 auf. Soweit es sich bei den Laschenlöchern 3 um kreisrunde Bohrungen handelt, kann statt der Lochachse auch von einer Bohrungsachse oder Mittelachse gesprochen werden. Grundsätzlich sind beliebige Formen der Laschenlöcher denkbar.

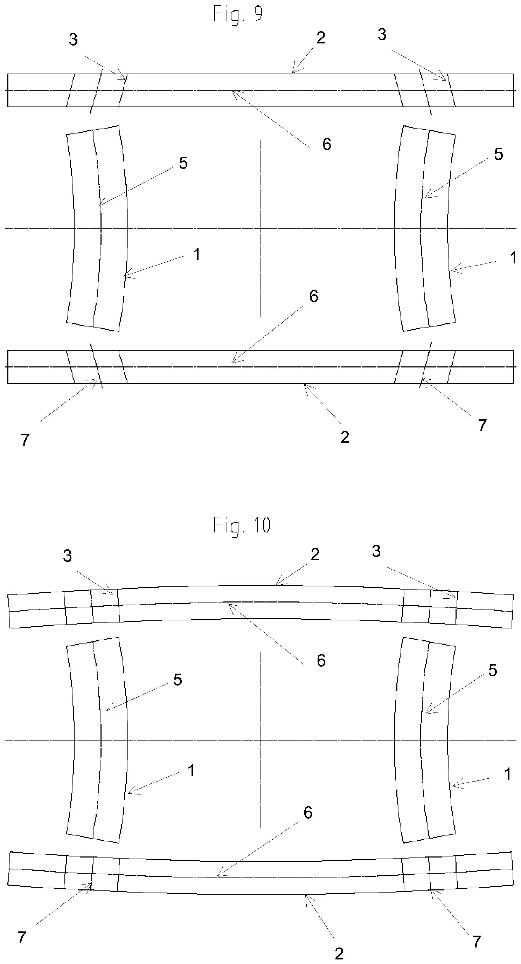

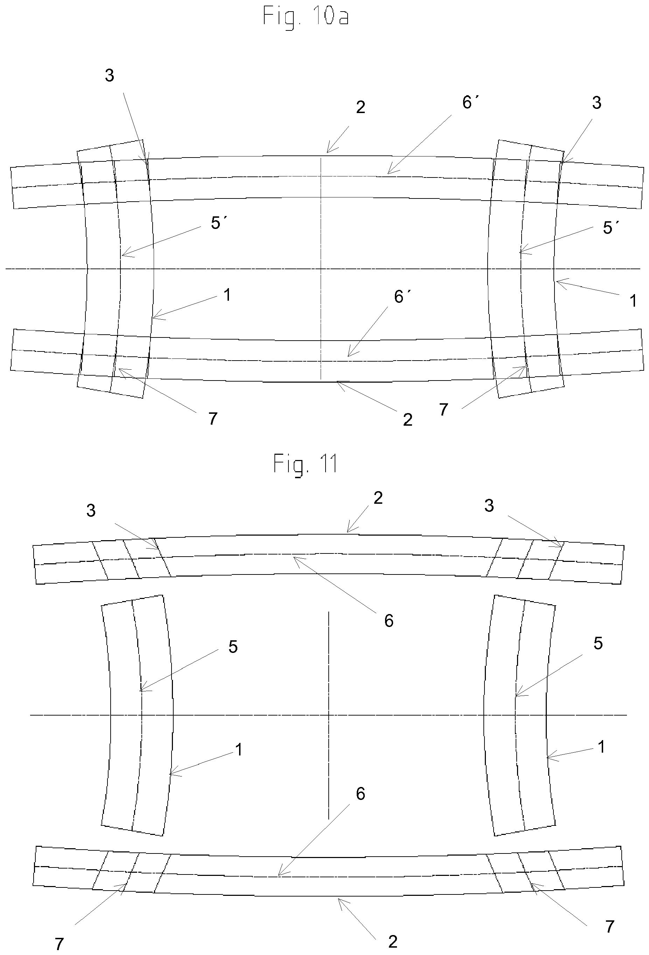

Die vorgenannten Kettenelemente können zu einem Kettenglied verbaut werden. Ein verbauter Zustand der Kettenglieder ist in der Fig. 10a dargestellt. Zur Verdeutlichung der Unterschiede zwischen einem unverbauten und einem verbauten Zustand der vorgenannten Kettenelemente, insbesondere in Bezug auf dessen Längsachsen, sind die jeweiligen Längsachsen von Lasche, Bolzen und Buchse im verbauten Zustand mit einem Strich gekennzeichnet, dementsprechend als 5' und 6'. Die Darstellung der Krümmungen ist übertrieben dargestellt und dient der Visualisierung der jeweiligen Krümmungen. Für die einzelnen Kettenelemente werden Materialien, insbesondere Stähle, verwendet, die eine entsprechende Umformung ermöglichen und die ausreichend elastische Eigenschaften aufweisen, insbesondere um eine entsprechende Spannung innerhalb des Kettengliedes aufzubauen.

Wie bereits oben angesprochen, können die Kettenelemente bzw. die Laschenlöcher verschiedene Ausgestaltungen aufweisen. Die nachfolgende Tabelle gibt eine Übersicht über die möglichen Ausgestaltungen, die zu einer erwünschten Vorspannung, insbesondere einer negativen Vorspannung, innerhalb des Kettengliedes bzw. der Kette führen können.

| **Variante** | **Bolzen / Buchse** | **Lasche** | **Laschenloch** |
|---|---|---|---|
| 1 (Fig. 5) | Gerade | Gerade | Schräg |
| 2 (Fig. 6) | Gerade | Gebogen | Senkrecht |
| 3 (Fig. 7) | Gerade | Gebogen | Schräg |
| 4 (Fig. 8) | Gebogen | Gerade | Senkrecht |
| 5 (Fig. 9) | Gebogen | Gerade | Schräg |
| 6 (Fig. 10) | Gebogen | Gebogen | Senkrecht |
| 7 (Fig. 11) | Gebogen | Gebogen | Schräg |

Eine erste Variante eines Kettengliedes ist in Fig. 5 dargestellt. In einem unverbauten Zustand ist die Längsachse 6 der Lasche 2 und auch die Längsachse 5 der Bolzen 1 gerade. Die Lochachse 7 der Laschenlöcher 3 ist in dieser Variante jedoch nicht senkrecht zu der Längsachse 6 der Lasche 2 ausgerichtet, sprich es sind schräge Laschenlöcher in den Laschen vorgesehen. Dies könnte auch dadurch charakterisiert werden, dass die Laschenlöcher schief zum Längslauf der Kette gestellt sind. Zur Herstellung des Kettengliedes werden die Bolzenenden in die Laschenlöcher 3 eingebracht. Da die Bolzen 1 und die Laschen 2 gerade sind, die Laschenlöcher 3 jedoch schräg, werden sowohl die Laschen 2, als auch die Bolzen 1 durch die entstehende Spannung gekrümmt, so dass das resultierende Kettenglied in etwa eine Gestalt aufweist, wie sie in der Fig. 10a angedeutet ist. Die schrägen Laschenlöcher lassen sich herstellungstechnisch besonders vorteilhaft realisieren und ermöglichen eine kostengünstige Herstellung eines vorgespannten Kettengliedes bzw. einer Kette mit negativer Vorspannung. Die Längsachse 5' der Bolzen als auch die Längsachse 6' der Laschen innerhalb des Kettengliedes ist nicht gerade, insbesondere gekrümmt. Die Lochachse ist auch im verbauten Zustand mit 7 bezeichnet, da sie sich - zumindest im technisch relevanten Maße - nicht krümmt. Grundsätzlich werden hier und auch in den nachfolgenden Varianten demnach Kettenelemente miteinander verbaut, die eigentlich nicht zueinander passen. Besonders vorteilhafte bei dieser Variante ist, dass Laschen und Bolzen jeweils mit einer geraden Erstreckung gefertigt werden können und die Vorspannung, insbesondere die negative Vorspannung, erst mit dem Zusammenbau des Kettengliedes bzw. der Kette erzeugt wird. Das Kettenglied gemäß Fig. 10a zeichnet sich insbesondere dadurch aus, dass die Laschen 2 nach außen und die Bolzen 1 bzw. Buchsen 4 nach innen gekrümmt sind.

Um Wiederholungen zu vermeiden, soll darauf verwiesen werden, dass alle nach den Varianten hergestellten Kettenglieder im Prinzip eine Gestalt annehmen können wie sie in Fig. 10a angedeutet ist. Geringfügige Abweichungen können sich insbesondere durch eine schräge bzw. nicht schräge Ausrichtung der Laschenlöcher ergeben.

Eine zweite Variante eines Kettengliedes ist in Fig. 6 dargestellt. In einem unverbauten Zustand ist die Längsachse 6 der Lasche 2 gekrümmt und die Längsachse 5 der Bolzen 1 gerade. Einfach ausgedrückt, werden in dieser Variante krumme Laschen 2 mit geraden Bolzen 1 verbaut. Die Lochachse 7 der Laschenlöcher 3 ist in dieser Variante senkrecht zu dem jeweiligen Abschnitt der Längsachse 6 der Lasche bzw. zur Laufrichtung der Kette ausgerichtet, sprich es sind zu dem jeweiligen Abschnitt gerade Laschenlöcher 3 in den Laschen 2 vorgesehen. Zur Herstellung des Kettengliedes werden die Bolzenenden in die Laschenlöcher 3 eingebracht. Da die Bolzen 1 gerade sind, die Laschen 2 jedoch gekrümmt, werden auch die Bolzen 1 durch die entstehende Spannung gekrümmt, so dass das resultierende Kettenglied in etwa eine Gestalt aufweist, wie sie in der Fig. 10a angedeutet ist. Insgesamt steht das Kettenglied, insbesondere deren Kettenelemente, unter einer erwünschten Spannung.

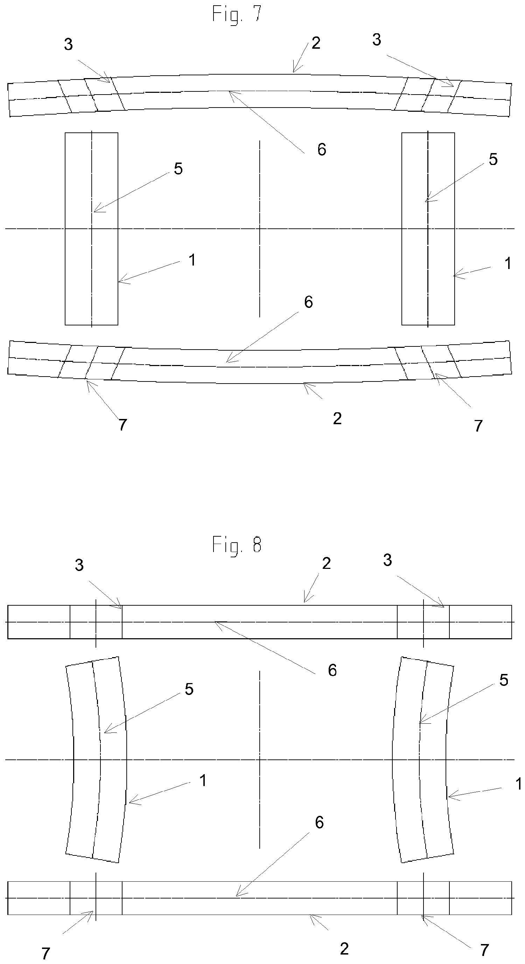

Eine dritte Variante eines Kettengliedes ist in Fig. 7 dargestellt. In einem unverbauten Zustand ist die Längsachse 6 der Lasche 2 gekrümmt und die Längsachse 5 der Bolzen 1 gerade. Einfach ausgedrückt, werden in dieser Variante krumme Laschen 2 mit geraden Bolzen 1 verbaut. Die Lochachse 7 der Laschenlöcher 3 ist in dieser Variante schräg zu dem jeweiligen Abschnitt der Längsachse 6 der Lasche bzw. zur Laufrichtung der Kette ausgerichtet, sprich es sind zu dem jeweiligen Abschnitt der Längsachse schräge Laschenlöcher 3 in den Laschen 2 vorgesehen. Zur Herstellung des Kettengliedes werden die Bolzenenden in die Laschenlöcher 3 eingebracht. Da die Bolzen 1 gerade sind, die Laschen 2 jedoch gekrümmt und die Laschenlöcher 3 angeschrägt sind, werden auch die Bolzen 1 durch die entstehende Spannung gekrümmt, so dass das resultierende Kettenglied in etwa eine Gestalt aufweist, wie sie in Fig. 10a angedeutet ist. Insgesamt steht das Kettenglied, insbesondere deren Kettenelemente, unter einer erwünschten Spannung. Die vorgenannte Variante ist herstellungstechnisch besonders vorteilhaft, da die Bolzenenden und die jeweiligen Laschenlöcher 3 in einem unverbauten Zustand bereits ansatzweise zueinander ausgerichtet werden können.

Eine vierte Variante eines Kettengliedes ist in Fig. 8 dargestellt. In einem unverbauten Zustand ist die Längsachse 6 der Lasche 2 gerade und die Längsachse 5 der Bolzen 1 gekrümmt. Einfach ausgedrückt, werden in dieser Variante gerade Laschen mit krummen Bolzen verbaut. Die Lochachse 7 der Laschenlöcher 3 ist in dieser Variante senkrecht zu der Längsachse der Lasche bzw. zur Laufrichtung der Kette ausgerichtet, sprich es sind gerade Laschenlöcher 3 in den Laschen 2 vorgesehen. Zur Herstellung des Kettengliedes werden die Bolzenenden in die Laschenlöcher 3 eingebracht. Da die Bolzen 1 gekrümmt und die Laschenlöcher 3 senkrecht bzw. gerade sind, werden auch die Laschen 2 durch die entstehende Spannung gekrümmt, so dass das resultierende Kettenglied in etwa eine Gestalt aufweist, wie sie in Fig. 10a angedeutet ist. Insgesamt steht das Kettenglied, insbesondere deren Kettenelemente, durch die eigentlich nicht passenden Kettenelemente unter einer erwünschten Spannung.

Eine fünfte Variante eines Kettengliedes ist in Fig. 9 dargestellt. In einem unverbauten Zustand ist die Längsachse 6 der Lasche 2 gerade und die Längsachse 5 der Bolzen 1 gekrümmt. Einfach ausgedrückt, werden in dieser Variante gerade Laschen mit krummen Bolzen verbaut. Die Lochachse 7 der Laschenlöcher 3 ist in dieser Variante schräg zu der Längsachse 6 der Lasche bzw. zur Laufrichtung der Kette ausgerichtet, sprich es sind schräge Laschenlöcher 3 in den Laschen 2 vorgesehen. Zur Herstellung des Kettengliedes werden die Bolzenenden in die Laschenlöcher 3 eingebracht. Da die Bolzen 1 gekrümmt sind, die Laschen 2 jedoch gerade und die Laschenlöcher 3 angeschrägt sind, werden auch die Laschen 2 durch die entstehende Spannung gekrümmt, so dass das resultierende Kettenglied in etwa eine Gestalt aufweist, wie sie in Fig. 10a angedeutet ist. Insgesamt steht das Kettenglied, insbesondere deren Kettenelemente unter einer erwünschten Spannung. Die vorgenannte Variante ist herstellungstechnisch besonders vorteilhaft, da die Bolzenenden und die jeweiligen Laschenlöcher in einem unverbauten Zustand bereits ansatzweise zueinander ausgerichtet werden können.

Eine sechste Variante eines Kettengliedes ist in Fig. 10 dargestellt. In einem unverbauten Zustand ist die Längsachse 6 der Lasche 2 gekrümmt und die Längsachse 5 der Bolzen 1 gekrümmt. Einfach ausgedrückt, werden in dieser Variante gekrümmte Laschen mit krummen Bolzen verbaut. Die Lochachse 7 der Laschenlöcher 3 ist in dieser Variante senkrecht zu dem jeweiligen Abschnitt der Längsachse der Lasche bzw. zur Laufrichtung der Kette ausgerichtet, sprich es sind gerade Laschenlöcher 3 in den Laschen vorgesehen. Zur Herstellung des Kettengliedes werden die Bolzenenden in die Laschenlöcher 3 eingebracht. Die Krümmung von Bolzen 1 und Lasche 2 kann derart ausgestaltet sein, dass dennoch eine Spannung in dem Kettenglied, insbesondere den Kettenelementen, entsteht. Die vorgenannte Variante ist herstellungstechnisch besonders vorteilhaft, da die Bolzenenden und die jeweiligen Laschenlöcher in einem unverbauten Zustand bereits ansatzweise zueinander ausgerichtet werden können.

Eine siebte Variante eines Kettengliedes ist in Fig. 11 dargestellt. In einem unverbauten Zustand ist die Längsachse 6 der Lasche 2 gekrümmt und die Längsachse 5 der Bolzen 1 gekrümmt. Einfach ausgedrückt, werden in dieser Variante gekrümmte Laschen mit krummen Bolzen verbaut. Die Lochachse 7 der Laschenlöcher 3 ist in dieser Variante schräg zu dem jeweiligen Abschnitt der Längsachse der Lasche bzw. zur Laufrichtung der Kette ausgerichtet, sprich es sind schräge Laschenlöcher in den Laschen vorgesehen. Zur Herstellung des Kettengliedes werden die Bolzenenden in die Laschenlöcher 3 eingebracht. Die Krümmung von Bolzen und Lasche und auch die Ausrichtung der Laschenlöcher kann derart ausgestaltet sein, dass dennoch eine Spannung in dem Kettenglied, insbesondere den Kettenelementen, entsteht. Die vorgenannte Variante ist herstellungstechnisch besonders vorteilhaft, da die Bolzenenden und die jeweiligen Laschenlöcher in einem unverbauten Zustand bereits ansatzweise zueinander ausgerichtet sind.

Auf die Darstellung der Varianten, die statt der Bolzen 1 Buchsen 4 enthalten wurde aus Gründen der Vermeidung von Wiederholungen verzichtet. In den zuvor genannten Varianten kann der massive Bolzen 1 durch eine hohlzylinderförmige Buchse 4 ersetzt werden. Die Ausgestaltung der Buchse, sprich gerade bzw. gebogene Buchse, entspricht den jeweiligen Vorgaben der Bolzen in den einzelnen Varianten.

Es ist ersichtlich, dass das Ergebnis der Herstellung eines Kettengliedes unter Verwendung mindestens eines oben skizzierten Kettenelementes in der Regel ein Kettenglied mit gebogener Lasche und gebogenem Bolzen ist (vgl. Fig. 10a). Die Biegung der Laschen 2 und Bolzen 1 in einem verbauten Zustand, sprich innerhalb eines Kettengliedes kann weitestgehend vorbestimmt werden, beispielsweise durch geeignete Materialauswahl und/oder Auswahl der Krümmung vor dem Zusammenbau. So kann beispielsweise auch vorgesehen sein, dass die Krümmung der Laschen sehr gering ist bzw. die Lasche in dem verbauten Zustand gerade bleibt. Nichtsdestotrotz ist der Bolzen 1 gekrümmt und das Kettenglied bzw. die Kettenelemente stehen unter der benötigten Vorspannung. Diese Ausführungsform mit möglichst geraden Laschen ist technisch besonders interessant, da hiermit Kollisionen mit den Laschen angrenzender Kettenglieder auf einfache Art und Weise vermieden werden können.

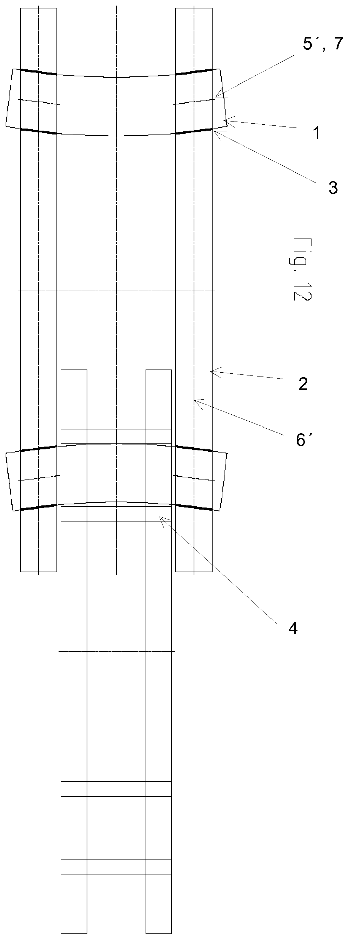

In der Fig. 12 ist eine erfindungsgemäße Kette mit zwei Kettengliedern abgebildet. Es handelt sich bei dem linken Kettenglied um ein Kettenglied welches aus geraden Laschen 2, schrägen Laschenlöchern 3 und geraden Bolzen 1 zusammengesetzt worden ist (vgl. Variante gemäß Fig. 5). Durch entsprechende Herstellungstechnik ist darauf geachtet worden, dass die Lasche 2 auch im verbauten Zustand, sprich im Kettenglied, möglichst gerade geblieben ist. Die Bolzen 1 sind jedoch gekrümmt. Das zweite, rechte Kettenglied ist ein Kettenglied gemäß dem Stand der Technik mit Laschen 2 und Buchsen 4. Ein Bolzen 1 des ersten Kettengliedes ist durch eine Buchse 4 des zweiten Kettengliedes hindurchgeführt. Die Kette ist in einem unbelasteten Zustand dargestellt, d.h. es wirken keine Zugkräfte auf die Kettengliedern ein. Es ist nachvollziehbar, dass die Kette, insbesondere der Bolzen "geradegezogen" wird, wenn eine entsprechende Zugkraft auf die Kette, insbesondere die Bolzen, einwirkt. Im Idealfalle sind die Bolzen 1 bzw. Buchsen 4 dann gerade, sprich deren Längsachsen 5 parallel, als auch die Laschen 2 gerade, sprich deren Längsachsen 6 parallel. Die Kette kann selbstverständlich noch durch weitere Kettenglieder erweitert werden, wobei sowohl Kettenglieder mit vorgespannten Kettenelementen, auch in der Ausführungsform mit Buchsen, als auch Kettenglieder gemäß dem Stand der Technik, sprich ohne vorgespannte Kettenelemente zum Einsatz kommen können.

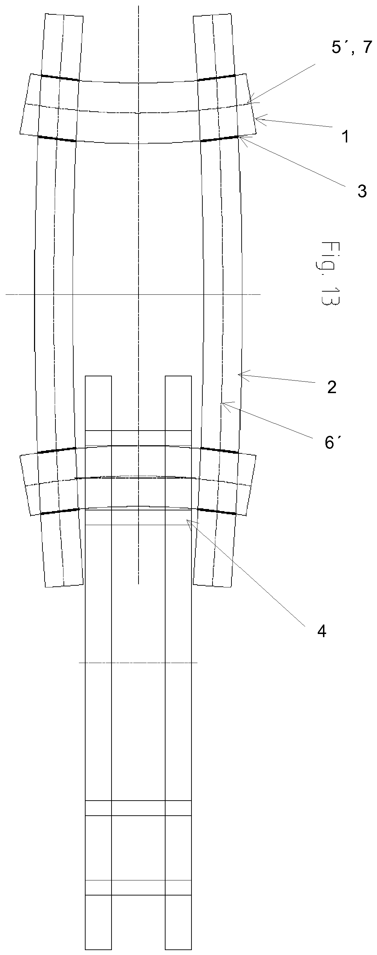

In der Fig. 13 ist eine erfindungsgemäße Kette mit zwei Kettengliedern abgebildet. Es handelt sich bei dem linken Kettenglied um ein Kettenglied mit vorgespannten Kettenelementen, welches aus gebogenen Laschen 2, senkrechten Laschenlöchern 3 und gebogenen Bolzen 1 zusammengesetzt worden ist (vgl. sechste Variante gemäß Fig. 10). Als zweites Kettenglied kommt abermals ein Kettenglied mit Buchsen 4 gemäß dem Stand der Technik zum Einsatz, wobei auch hier selbstverständlich ein Kettenglied mit vorgespannten Buchsen 4 oder anderen vorgespannten Kettenelementen eingesetzt werden kann. Ansonsten kann auf die Ausführungen zu Fig. 12 verwiesen werden, wobei in der vorliegenden Ausführungsform auch die Laschen "geradegezogen" werden.

Vorliegend wurden lediglich zwei Kombinationen von Kettengliedern in einer erfindungsgemäßen Kette näher betrachtet. Es ist jedoch grundsätzlich möglich jede der oben genannten Varianten der Kettenglieder jeweils in der Paarung mit Bolzen bzw. mit Buchsen miteinander zu kombinieren. So kann beispielsweise die erste Variante mit Bolzen mit der zweiten Variante mit Buchsen miteinander kombiniert werden. Auch können die Varianten mit herkömmlichen Kettengliedern zu einer erfindungsgemäßen Kette kombiniert werden.

## Patentansprüche

1. Kette, umfassend eine Anzahl von Kettenelementen, wobei mindestens ein Kettenelement mit einer Vorspannung verbaut ist, wobei es sich bei dem Kettenelement um eine Lasche (2) handelt, wobei die Lasche eine Längsachse (6') und Laschenlöcher (3) mit einer Lochachse (7) zur Aufnahme eines Bolzenendes oder eines Buchsenendes aufweist, **dadurch gekennzeichnet, dass** die Lochachse (7) nicht rechtwinkelig, insbesondere schräg, zu der Längsachse (6') oder der Zugrichtung (F) der Kette ausgerichtet ist.

2. Kette nach Anspruch 1, **dadurch gekennzeichnet, dass** es sich bei dem Kettenelement um einen Bolzen (1) und/oder eine Buchse (4) handelt.

3. Kette nach mindestens einem der vorhergehenden Ansprüche, **dadurch gekennzeichnet, dass** es sich um eine technische Kette handelt.

4. Kette nach mindestens einem der vorhergehenden Ansprüche, **dadurch gekennzeichnet, dass** es sich um eine eindimensional bewegliche Kette, das heißt eine Gelenkkette handelt.

5. Kette nach mindestens einem der vorhergehenden Ansprüche, **dadurch gekennzeichnet, dass** es sich um eine Bolzen- oder Rollenkette handelt.

6. Kette nach mindestens einem der vorhergehenden Ansprüche, **dadurch gekennzeichnet, dass** das mindestens eine mit einer Vorspannung verbaute Kettenelement mit einer zur bei Zugbelastung (F) der Kette auftretenden Zugrichtung negativen Vorspannung verbaut ist.

7. Kette nach mindestens einem der vorhergehenden Ansprüche, **dadurch gekennzeichnet, dass** das mindestens eine mit einer Vorspannung verbaute Kettenelement in einem unbelasteten Zustand der Kette eine von der geraden Form abweichende Gestalt aufweist.

8. Kette nach mindestens einem der vorhergehenden Ansprüche, **dadurch gekennzeichnet, dass** die Lasche (2) eine Längsachse (6') aufweist, wobei die Längsachse (6') in einem zugunbelasteten Zustand der Kette nicht gerade ist, insbesondere eine gekrümmte Form aufweist.

9. Kette nach mindestens einem der vorhergehenden Ansprüche, **dadurch gekennzeichnet, dass** der Bolzen (1) oder die Buchse (4) eine Längsachse (5') aufweist, wobei die Längsachse (5') in einem zugunbelasteten Zustand der Kette nicht gerade ist, insbesondere eine gekrümmte Form aufweist.

10. Kette nach mindestens einem der vorhergehenden Ansprüche, **dadurch gekennzeichnet, dass** mindestens zwei Bolzen (1) oder Buchsen (4) und zwei Laschen (2) ein Kettenglied der Kette bilden, wobei die Bolzen (1) oder Buchsen (4) in einem unbelasteten Zustand der Kette eine jeweils dem anderen Bolzen bzw. Buchse zugewandte Krümmung aufweisen, wobei die Laschen (2) in einem zugunbelasteten Zustand der Kette eine jeweils der anderen Lasche abgewandte Krümmung aufweisen,

11. Kette nach mindestens einem der vorhergehenden Ansprüche, **dadurch gekennzeichnet, dass** die Laschen (2) in einem zugbelasteten Zustand der Kette, insbesondere deren Längsachsen, parallel zueinander ausgerichtet sind, wobei die Bolzen (1) oder Buchsen (4) in einem zugbelasteten Zustand der Kette, insbesondere deren Längsachsen, parallel zueinander ausgerichtet sind.

12. Verfahren zu Herstellung einer Kette gemäß einem der Ansprüche 1 bis 11, **gekennzeichnet durch** mindestens nachfolgende Verfahrensschritte:
- Zusammenfügen mindestens eines Kettengliedes aus mindestens zwei Laschen (2) mit Laschenlöchern (3) und zwei Bolzen (1) oder Buchsen (4), wobei
- die Lasche (2) eine Längsachse (6) und die Laschenlöcher eine Lochachse (7) aufweisen, wobei die Lochachse (7) nicht rechtwinkelig, insbesondere schräg, zu der Längsachse (6) oder einer Zugrichtung (F) der Kette ausgerichtet ist
- Zusammenfügen der Kette aus mindestens zwei Kettengliedern, wobei mindestens ein derart hergestelltes Kettenglied verwendet wird.

## Claims

1. Chain comprising a number of chain elements, wherein at least one chain element is installed with a bias, wherein the chain element is a bracket (2), wherein the bracket has a longitudinal axis (6') and bracket holes (3) with a hole axis (7) for receiving a bolt end or a bushing end, **characterised in that** the hole axis (7) is not is aligned perpendicularly, in particular obliquely to the longitudinal axis (6') or to the pulling direction (F) of the chain.

2. Chain according to claim 1, **characterised in that** the chain element is a bolt (1) and / or a bushing (4).

3. Chain according to at least one of the preceding claims, **characterised in that** it is a technical chain.

4. Chain according to at least one of the preceding claims, **characterised in that** it is a one-dimensionally movable chain, that is a joint chain is involved.

5. Chain according to at least one of the preceding claims, **characterised in that** it is a bolt or roller chain.

6. Chain according to at least one of the preceding claims, **characterised in that** the at least one chain element, built with a bias, with an occurring tensile direction under tensile load (F) of the chain, is installed with a negative bias.

7. Chain according to at least one of the preceding claims, **characterised in that** the at least one chain element built-in with a bias in an unloaded state of the chain has a shape deviating from the straight shape.

8. Chain according to at least one of the preceding claims, **characterised in that** the bracket (2) has a longitudinal axis (6'), wherein the longitudinal axis (6') in a state of the chain not under tensile load is not straight, in particular has a curved shape.

9. Chain according to at least one of the preceding claims, **characterised in that** the bolt (1) or the bush (4) has a longitudinal axis (5'), wherein the longitudinal axis (5') in a state of the chain not under tensile load is not straight, in particular has a curved shape.

10. Chain according to at least one of the preceding claims, **characterised in that** at least two bolts (1) or bushings (4) and two brackets (2) form a chain link of the chain, wherein the bolts (1) or bushings (4) in an unloaded state of the chain each has a curvature facing the other bolt or bushing, wherein the brackets (2) in a state of the chain not under tensile load each has a different bracket curvature turned away.

11. Chain according to at least one of the preceding claims, **characterised in that** the brackets (2) are aligned in a state of the chain under tensile load, in particular their longitudinal axes, parallel to each other, wherein the bolts (1) or bushings (4) in a state of the chain under tensile load, in particular their longitudinal axes, are aligned parallel to each other.

12. Process for manufacturing a chain according to one of claims 1 to 11, **characterised by** at least the following process steps:
- assembling at least one chain link from at least two brackets (2) with bracket holes (3) and two bolts (1) or bushings (4), wherein
- the bracket (2) has a longitudinal axis (6) and the bracket holes a hole axis (7), wherein the hole axis (7) is not perpendicular, in particular obliquely, aligned with the longitudinal axis (6) or with a pulling direction (F) of the chain
- assembling the chain of at least two chain links, wherein at least one chain link thus produced is used.

## Revendications

1. Chaîne, comprenant un nombre donné d'éléments de chaîne, dans laquelle au moins un élément de chaîne est monté avec une précontrainte, dans laquelle l'élément de chaîne est une bride (2), dans laquelle la bride présente un axe longitudinal (6') et des trous de bride (3) avec un axe de trou (7) servant à recevoir une extrémité de boulon ou une extrémité de douille, **caractérisée en ce que** l'axe de trou (7) n'est pas orienté de manière perpendiculaire, en particulier de manière oblique, par rapport à l'axe longitudinal (6') ou à la direction de traction (F) de la chaîne.

2. Chaîne selon la revendication 1, **caractérisée en ce que** l'élément de chaîne est un boulon (1) et/ou une douille (4).

3. Chaîne selon au moins l'une quelconque des revendications précédentes, **caractérisée en ce qu'**il s'agit d'une chaîne technique.

4. Chaîne selon au moins l'une quelconque des revendications précédentes, **caractérisée en ce qu'**il s'agit d'une chaîne mobile de manière unidimensionnelle, en d'autres termes d'une chaîne articulée.

5. Chaîne selon au moins l'une quelconque des revendications précédentes, **caractérisée en ce qu'**il s'agit d'une chaîne à boulons ou à rouleaux.

6. Chaîne selon au moins l'une quelconque des revendications précédentes, **caractérisée en ce que** l'au moins un élément de chaîne monté avec une précontrainte est monté avec une précontrainte négative par rapport à la direction de traction apparaissant lors de la contrainte de traction (F) exercée sur la chaîne.

7. Chaîne selon au moins l'une quelconque des revendications précédentes, **caractérisée en ce que** l'au moins un élément de chaîne monté avec une précontrainte présente dans un état non contraint de la chaîne une forme divergeant de la forme rectiligne.

8. Chaîne selon au moins l'une quelconque des revendications précédentes, **caractérisée en ce que** la bride (2) présente un axe longitudinal (6'), dans laquelle l'axe longitudinal (6') n'est pas rectiligne dans un état non contraint par une traction de la chaîne, en particulier présente une forme incurvée.

9. Chaîne selon au moins l'une quelconque des revendications précédentes, **caractérisée en ce que** le boulon (1) ou la douille (4) présente un axe longitudinal (5'), dans laquelle l'axe longitudinal (5') n'est pas rectiligne dans un état non contraint par une traction de la chaîne, en particulier présente une forme incurvée.

10. Chaîne selon au moins l'une quelconque des revendications précédentes, **caractérisée en ce qu'**au moins deux boulons (1) ou douilles (4) et deux brides (2) forment un maillon de chaîne de la chaîne, dans laquelle les boulons (1) ou douilles (4) présentent, dans un état non contraint de la chaîne, une incurvation tournée respectivement vers l'autre boulon ou douille, dans laquelle les brides (2) présentent dans un état non contraint par une traction de la chaîne une incurvation opposée respectivement à l'autre bride.

11. Chaîne selon au moins l'une quelconque des revendications précédentes, **caractérisée en ce que** les brides (2), en particulier leurs axes longitudinaux, sont orientées de manière parallèle les uns par rapport aux autres dans un état contraint par une traction de la chaîne, dans laquelle les boulons (1) ou douilles (4), en particulier leurs axes longitudinaux, sont orientés de manière parallèle les uns par rapport aux autres dans un état contraint par une traction de la chaîne.

12. Procédé servant à fabriquer une chaîne selon l'une quelconque des revendications 1 à 11, **caractérisé par** au moins des étapes de procédé suivantes :
- l'assemblage au moins d'un maillon de chaîne à partir d'au moins deux brides (2) avec des trous de bride (3) et deux boulons (1) ou douilles (4), dans lequel
- la bride (2) présente un axe longitudinal (6) et les trous de bride présentent un axe de trou (7), dans lequel l'axe de trou (7) n'est pas orienté de manière perpendiculaire, en particulier de manière inclinée, par rapport à l'axe longitudinal (6) ou à une direction de traction (F) de la chaîne,
- l'assemblage de la chaîne à partir d'au moins deux maillons de chaîne, dans lequel au moins un maillon de chaîne fabriqué de cette manière est utilisé.
